# EUROPÄISCHE PATENTANMELDUNG

(11) **EP 2 570 783 A1**
(43) Veröffentlichungstag der Anmeldung: **20.03.2013**
(21) Anmeldenummer: 12006376.3
(22) Anmeldetag: 11.09.2012
(51) Int. Cl.: G01F 1/68, G01F 15/06

(54) **Messvorrichtung für Wasserzähler und Verfahren zum Betreiben einer batteriebetriebenen Messvorrichtung**

(30) Priorität: 15.09.2011 DE 102011113541
(71) Anmelder: Sensus Spectrum LLC, Raleigh NC 27615 (US)
(72) Erfinder: Schäfer, Burghard, 67112 Mutterstadt (DE); Chu, Anh Tuan, 67071 Ludwigshafen (DE)
(74) Vertreter: Patentanwälte Bitterich, Dr. Keller, Schwertfeger

(57) **Zusammenfassung**

Die vorliegende Erfindung betrifft eine Messvorrichtung für einen Fluidzähler sowie ein Verfahren zum Betreiben einer batteriebetriebenen Messvorrichtung (10) für Fluidzähler, umfassend einen Messsensor (12) zum Erfassen eines Messsignals, eine Auslese/Auswerteeinheit (16) zur Ausgabe eines erfassten Messwerts und einer Steuereinheit (18), die mit dem Messsensor (12) verbunden ist, wobei die Messvorrichtung in einem Schlafmodus und in wenigstens einem Wachmodus betreibbar ist, umfassend die Schritte:
- Setzen der Messvorrichtung (10) in den Schlafmodus;
- Periodisches Erfassen eines Messsignals im Schlafmodus mit einer ersten Taktrate;
- Umschalten in einen Wachmodus, wenn im Schlafmodus ein Messsignal mit einem Messwert erfasst wird, der einen ersten vorgegebenen Wert überschreitet;
- Periodisches Erfassen des Messsignals in dem Wachmodus mit einer zweiten Taktrate und Weiterleiten des Messwerts des Messsignals an eine Auslese/Auswerteeinheit (16);
- Umschalten in den Schlafmodus, wenn der erfasste Messwert in dem Wachmodus einen zweiten vorgegebenen Wert unterschreitet:

wobei die Messvorrichtung (10) im Schlafmodus mit einem geringeren Energieverbrauch betrieben wird als in dem wenigstens einen Wachmodus.

## Beschreibung

Die vorliegende Erfindung betrifft ein Verfahren zum Betreiben einer batteriebetriebenen Messvorrichtung eines Fluidzählers nach dem Oberbegriff des Anspruchs 1 sowie eine Messvorrichtung eines Fluidzählers nach dem Oberbegriff des Anspruchs 12.

Bei batteriebetriebenen elektronischen Fluidzähler wie etwa Wasserzählern muss für die Dauer der Eichgültigkeit, die zurzeit bei 6 Jahren liegt, die Lebensdauer der Batterie gewährleistet sein. Inzwischen werden sogar Batterielebenszeiten von bis zu 15 Jahren gewünscht. Daneben werden immer höhere Anforderungen an die Messgenauigkeit eines Fluidzählers, insbesondere an die Bestimmung des Durchflusses gestellt, was dazu führt, dass bei zyklischen Messungen mit hohen Messraten gemessen werden muss. Da jede Einzelmessung mit einem Stromverbrauch verbunden ist, haben hohe Messraten somit einen hohen Stromverbrauch zur Folge und reduzieren dadurch folglich die Lebensdauer einer Batterie.

Zur Bestimmung des Durchflusses durch einen Fluidzähler werden bevorzugt thermische Anemometer mit entsprechenden thermischen Sensoren eingesetzt. Bei einem thermischen Anemometer wird ein Draht, der mit der Fluidströmung in thermischem Kontakt steht, mit einem Heizstrom erhitzt und anschließend wird der Widerstand des Drahtes gemessen. Der Widerstandswert des Drahtes ist abhängig von der Strömungsgeschwindigkeit des Wassers, wobei mit Hilfe der Strömungsgeschwindigkeit der Durchfluss bestimmt werden kann.

Die Temperatur des Drahtes eines Anemometers hat einen Einfluss auf die Messauflösung. Je heißer der Draht, desto höher ist, insbesondere bei hohen Strömungsgeschwindigkeiten, die Messauflösung. Ein Anemometer benötigt somit vergleichsweise viel Energie, um eine Strömungsgeschwindigkeit mit einer hohen Auflösung zu messen. Da, wie bereits oben erwähnt, zur exakten Bestimmung des Durchflusses hohe Messraten erforderlich sind, ist der Stromverbrauch eines thermischen Anemometers vergleichsweise hoch. Um thermische Anemometer in batteriebetriebene Fluidzählem über die erforderliche Eichgültigkeit von 6 Jahren einsetzten zu können, muss eine Batterie eine sehr hohe Kapazität aufweisen. Batterien mit solch einer hohen Kapazität sind jedoch vergleichsweise teuer und machen den Einsatz von thermischen Anemometern in batteriebetriebenen Messvorrichtungen unrentabel.

Es ist somit wünschenswert, ein Verfahren zum Betreiben einer batteriebetriebenen Messvorrichtung eines Fluidzählers bereitzustellen sowie eine batteriebetriebene Messvorrichtung eines Fluidzählers, die einen sicheren und langen Einsatz einer Batterie, insbesondere bei einem thermischen Strömungsmesser, ohne Einbußen an Genauigkeit ermöglichen.

Erfindungsgemäß wird diese Aufgabe durch ein Verfahren zum Betreiben einer batteriebetriebenen Messvorrichtung eines Fluidzählers gelöst, wobei die Messvorrichtung einen Messsensor zum Erfassen eines Messignals, eine Auslese-/Auswerteeinheit zur Ausgabe eines erfassten Messwerts und eine Steuereinheit, die mit dem Messsensor verbunden ist, umfasst und in einem Schlafmodus und in wenigstens einem Wachmodus betreibbar ist, welches folgende Schritte umfasst. Zunächst wird die Messvorrichtung in einen Schlafmodus gesetzt und das Messsignal mit einer ersten Taktrate periodisch erfasst. Wenn im Schlafmodus ein Messsignal erfasst wird, das einen ersten vorgegebenen Wert überschreitet, wird die Messvorrichtung in den Wachmodus geschalten. In dem Wachmodus wird mit einer zweiten Taktrate das Messsignal periodisch erfasst und der Messwert des Messsignals an eine Auslese/Auswerteeinheit weitergeleitet, wobei der Messwert ein Maß zu Bestimmung des Durchflusses eines Fluidstroms durch den Fluidzähler ist. Wenn der erfasste Messwert in dem Wachmodus einen zweiten vorgegebenen Wert unterschreitet, wird die Messvorrichtung in den Schlafmodus geschalten. Die Messvorrichtung wird hierbei im Schlafmodus mit einem geringeren Energieverbrauch betrieben als in dem wenigstens einen Wachmodus, indem der Messsensor im Schlafmodus mit einer geringeren Leistung betrieben wird als im Wachmodus.

Der Erfindung liegt die Erkenntnis zu Grunde, dass der Durchfluss von Wasser durch einen Wasserzähler über den Tag stark variiert. So gibt es Zeiten am Tag, an denen viel Wasser verbraucht wird, zum Beispiel am Morgen, und Zeiten, in denen kaum Wasserverbrauch stattfindet, beispielsweise während der Nacht oder zu bestimmten Zeiten am Tage, wie beispielsweise vormittags oder nachmittags. Im Laufe eines Tages gibt es somit viele Zeitabschnitte, in denen der Wasserzähler den Durchfluss Null ermittelt.

Insbesondere liegt der Erfindung die Erkenntnis zu Grunde, dass der Wasserzähler pro Tag über einen kumulierten Zeitraum von etwa 4,5 Stunden einen Durchfluss größer Null ermittelt. Die übrige Zeit ermittelt der Wasserzähler einen Durchfluss von etwa Null.

Da die meiste Zeit des Tages mit einem Durchfluss von nahezu Null gerechnet werden kann, befindet sich die Messvorrichtung gemäß dem erfindungsgemäßen Verfahren im Grundzustand in einem Schlafmodus, in dem der Messsensor mit einem im Vergleich zum Wachmodus geringeren Energieverbrauch mit hinreichender Genauigkeit ein Messsignal erfasst, das einen Hinweis auf einen Fluiddurchfluss wie etwa Wasserdurchfluss durch den Fluidzähler liefert und gegebenenfalls zur Berechnung des kumulierten Verbrauchs verwendet wird. Sobald die Messvorrichtung im Schlafmodus ein Messsignal erfasst, dessen Wert über einem ersten vorgegebenen Wert liegt, schaltet die Messvorrichtung in den Wachmodus um, um die durch den Fluidzähler durchströmende Fluidmenge zu erfassen. Dadurch, dass die Messvorrichtung im Schlafmodus mit einer geringeren Leistung betrieben wird als im Wachmodus, kann Strom der Batterie gespart werden, was insgesamt zu einer längeren Lebensdauer der Batterie führt. Da in den Zeiten, in denen ein Flulddurchfluss erfasst wird, die Messwerte in dem Modus erfasst werden, bei dem der Messwert mit einer vergleichsweise hohen Genauigkeit bestimmt werden kann, nämlich dem Wachmodus, weist die efindungsgemäße Vorrichtung keine Einbußen an Genauigkeit im Vergleich zu Messvorrichtungen auf, die nur im Wachmodus betrieben werden.

Bei einer bevorzugten Weiterbildung der Erfindung kann die Lebensdauer einer Batterie weiter erhöht werden, indem die Messvorrichtung in einem ersten und einem zweiten Wachmodus betreibbar ist, wobei das erfindungsgemäße Verfahren folgende Schritte umfasst: Zunächst wird von dem Schlafmodus in den ersten Wachmodus umgeschaltet. wenn im Schlafmodus ein Messsignal mit einem Messwert erfasst wird, der einen ersten vorgegebenen Wert überschreitet. Das Messsignal wird periodisch mit einer zweiten Taktrate erfasst und der Messwert des Messsignals wird an eine Auslese/Auswerteinheit weitergeleitet, wobei der Messwert ein Maß zur Bestimmung des Durchflusses eines Fluidstroms durch den Fluidzähler ist. Danach erfolgt ein Umschalten von dem ersten Wachmodus in den zweiten Wachmodus, wenn ein Messsignal mit einem Wert erfasst wird. der gleich oder oberhalb des zweiten und gleich oder unterhalb eines dritten vorgegebenen Wertes liegt, wobei der Messwert ein Maß zu Bestimmung des Durchflusses eines Fluidstroms durch den Fluidzähler ist. In dem zweiten Wachmodus wird das Messsignal mit einer dritten Taktrate periodisch erfasst und der Wert des Messsignals an eine Auslese/Auswerteeinheit weitergeleitet. Ein Umschalten in den ersten Wachmodus oder in den Schlafmodus erfolgt in Abhängigkeit von dem Wert des erfassten Messsignals im zweiten Wachmodus.

Bei einer alternativen bevorzugten Weiterbildung der Erfindung, bei der die Messvorrichtung In einem ersten und einem zweiten Wachmodus betreibbar ist, erfolgt zunächst ein Umschalten vom Schlafmodus in einen ersten oder zweiten Wachmodus in Abhängigkeit von dem erfassten Messwert. Im ersten oder zweiten Wachmodus wird das Messsignal mit einer vorgegebenen Taktrate periodisch erfasst und der Messwert an eine Auslese/Auswerteeinheit weitergeleitet, wobei der Messwert ein Maß zur Bestimmung des Durchflusses eines Fluidstromes durch den Fluidzähler ist. Ein Umschalten von dem ersten Wachmodus in den zweiten Wachmodus oder Schlafmodus bzw. vom dem zweiten Wachmodus in den ersten Wachmodus oder Schlafmodus erfolgt anschließend in Abhängigkeit von dem Wert des erfassten Messsignals.

Weiterhin ist bevorzugt, dass eine Vielzahl von Wachmodi vorgesehen ist und das Umschalten zwischen der Vielzahl von Wachmodi und dem Schlafmodus und zwischen den Wachmodi in Abhängigkeit vorgegebener Messwerte erfolgt.

Darüber hinaus ist es vorteilhaft, dass die Messvorrichtung in den einzelnen Wachmodi mit unterschiedlicher Leistung betrieben wird.

All die eben genannten Weiterbildungen haben den Vorteil, dass die Messvorrichtung die Messwerte mit einer hohen Genauigkeit bei einem möglichst geringen Stromverbrauch erfasst.

Für ein schnelles Umschalten von dem Schlafmodus in den wenigstens einen Wachmodus und umgekehrt ist es von Vorteil, dass das Umschalten zwischen dem wenigstens einen Wachmodus und dem Schlafmodus und/oder zwischen den Wachmodi mittels der Steuereinheit erfolgt.

Bei dem erfindungsgemäßen Verfahren ist es vorteilhaft, dass der Messsensor in einem Wachmodus ein Messignal liefert, dessen Messwert ein Maß zur Bestimmung des Durchflusses eines Fluidstromes durch den Fluldzähler ist, und dass im Schlafmodus der Messsensor ein Wächter ist. Somit dient der Messsensor im Wachmodus zur bestimmungsgemäßen Erfassung der Strömungsgeschwindigkeit bzw. des Durchflusses eines Fluidstroms durch den Fluidzähler. Im Schlafmodus hat der Messsensor hingegen die Funktion eines Wächters, um festzustellen, ob ein Fluiddurchfluss vorliegt oder nicht.

Bei einer alternativen Ausführungsform sind der in einem Wachmodus erfasste Messwert sowie der im Schlafmodus erfasste Messwert ein Maß zur Bestimmung des Durchflusses eines Fluidstromes durch den Fluidzähler. Der Messwert ist beispielsweise das kumulierte Volumen des durchgeflossenen Fluids, wobei der im Schlafmodus erfasste Messwert gegebenenfalls in Abhängigkeit einer Schwelle für den minimalen Durchfluss an eine Auslese/Auswerteeinheit weitergeleitet werden kann.

Bei Anemometern bestimmt die Höhe des Heizstroms die Messauflösung und damit die Messgenauigkeit. Somit wird vorteilhafterweise bei der Verwendung des erfindungsgemäßen Verfahrens im Zusammenhang mit einem thermischen Anemometer mit einem Heizdraht der Heizdraht in dem wenigstens einen Wachmodus auf eine höhere Temperatur aufgeheizt als im Schlafmodus. Das im Schlafmodus erfasste Signal kann dann zur Überwachung dienen, ob ein Fluid wie Wasser fließt oder nicht. Sobald das Fluid fließt, wird das Anemometer in den wenigstens einen Wachmodus versetzt und der Heizdraht wird auf eine höhere Temperatur erhitzt, um die Strömungsgeschwindigkeit mit der erforderlichen höheren Genauigkeit zu bestimmen.

Weiterhin kann bei Anemometern bei geringen Strömungsgeschwindigkeiten, das heißt bei geringen Durchflüssen, die Temperatur des Heizdrahtes niedriger gewählt werden ais bei hohen Strömungsgeschwindigkeiten, das heißt bei hohen Durchflüssen, um einen Messwert mit einer hohen Genauigkeit zu erfassen. Daher ist es von Vorteil, dass, wenn der Messsensor ein thermisches Anemometer mit einem Heizdraht ist, der Heizdraht in den einzelnen Wachmodi unterschiedlich aufgeheizt wird.

Weiterhin wird die Aufgabe gelöst durch eine Messvorrichtung eines Fluidzählers, wobei die Messvorrichtung einen Messsensor zum Erfassen eines Messsignals, eine Auslese/Auswerteeinheit zur Ausgabe eines erfassten Messwerts, eine Steuereinheit, die mit dem Messsensor verbunden ist, und eine Batterie umfasst, wobei in Abhängigkeit von den erfassten Messwerten die Messvorrichtung mittels der Steuereinheit in einem Schlafmodus und in wenigstens einem Wachmodus betreibbar ist, wobei der im Wachmodus erfasste Messwert ein Maß zu Bestimmung des Durchflusses eines Fluidstroms durch den Fluidzähler ist und wobei die Messvorrichtung im Schlafmodus mit einem geringeren Energieverbrauch betreibbar ist als in dem wenigstens einen Wachmodus, indem der Messsensor im Schlafmodus mit einer geringeren Leistung betreibbar ist als im Wachmodus.

Mit Hilfe dieser Messvorrichtung kann insbesondere das erfindungsgemäße Verfahren durchgeführt werden.

Als Messsensor eignet sich beispielsweise ein thermisches Anemometer, ein magnetisch induktiver Messsensor oder ein Ultraschallströmungssensor.

Bevorzugte Ausführungsformen der Erfindung werden anhand der beigefügten Zeichnungen näher erläutert, in denen zeigen:
- Figur 1:: den prinzipiellen Aufbau einer Messvorrichtung;
- Figur 2:: ein Ablaufdiagramm eines erfindungsgemäßen Verfahrens mit einem Wachmodus;
- Figur 3:: eine schematische Darstellung eines erfindungsgemäßen Verfahrens mit zwei Wachmodl; und
- Figur 4:: eine schematische Darstellung eines erfindungsgemäßen Verfahrens mit einer Vielzahl von Wachmodi.

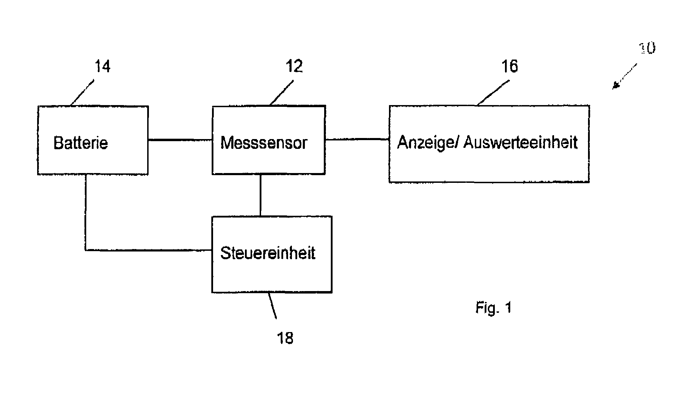

In Figur 1 ist der prinzipielle Aufbau einer Messvorrichtung für einen Fluidzähler dargestellt. Die Messvorrichtung 10 umfasst einen Messsensor 12, der von einer Batterie 14 betrieben wird. Der Messsensor 12 ist mit einer Anzeige/Auswerteeinheit 16 verbunden. Ebenso ist der Messsensor 12 mit einer Steuereinheit 18 verbunden, wobei zwischen Steuereinheit 18 und Stromversorgung in Form der Batterie 14 eine Verbindung besteht. Der Messsensor 12 ist beispielsweise ein thermisches Anemometer, ein magnetisch induktiver Messsensor oder ein Ultraschallstromungssensor.

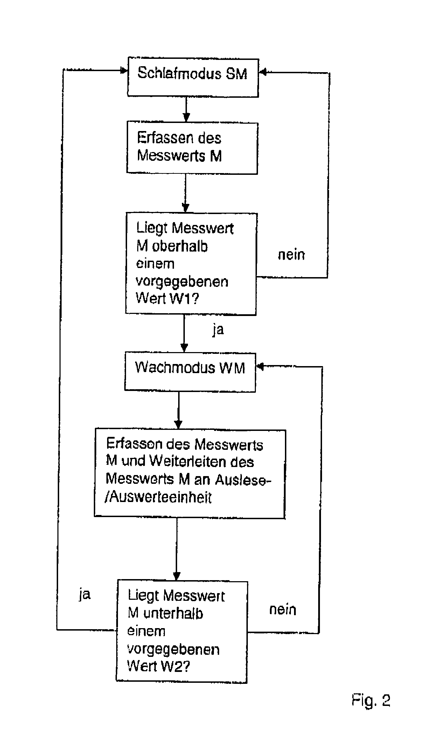

Figur 2 zeigt ein Ablaufdiagramm eines Verfahrens mit einem Wachmodus WM. Zunächst wird die Messvorrichtung 10 in den Schlafmodus SM gesetzt. Im Schlafmodus SM wird ein Messsignal mit einem Messwert M mittels des Messsensors 12 mit einer Taktrate T1 erfasst und der Messwert M gegebenenfalls an die Auslese/Auswerteeinheit 16 weitergeleitet. Ist der Messwert M gleich oder unterhalb eines ersten vorgegeben Wertes W1, bleibt die Messvorrichtung im Schlafmodus SM. Wird ein Messwert M erfasst, der den ersten vorgegebenen Wert W1 überschreitet, schaltet die Messvorrichtung 10 in den Wachmodus WM. Im Wachmodus WM wird das Messsignal mit einer Taktrate T2 erfasst und der erfasste Messwert M wird an die Auslese-/Auswerteinheit 16 weitergeleitet. Solange der erfasste Messwert M gleich oder oberhalb eines zweiten vorgegebenen Wertes W2 ist, bleibt die Messvorrichtung 10 im Wachmodus. Wird ein Wert ermittelt, der unterhalb des zweiten vorgegebenen Wertes W2 liegt, wird die Messvorrichtung 10 in den Schlafmodus SM geschalten. Die Messvorrichtung 10 wird hierbei im Schlafmodus SM mit einem geringeren Energieverbrauch betrieben als im Wachmodus WM.

Bei der dargestellten Ausführungsform wird beispielhaft mit einer Taktrate von einer Sekunde gemessen. Die Taktrate T1 entspricht der Taktrate T2. Der erste vorgegebene Wert W1 ist ein beliebig gewählter Wert wesentlich größer Null, während der zweite vorgegebene Wert W2 vorzugsweise etwas größer als Null ist. Die Werte W1 und W2 können auch nahezu gleich gewählt werden mit W1 > W2. Ebenso kann im Rahmen der Erfindung jede Taktrate beliebig gewählt werden.

Das im Wachmodus WM erfasste Messsignal ist ein Maß für die zu messende Meßgröße, und das im Schlafmodus SM erfasste Messsignal ist ein Steuersignal zum Umschalten in einen Wachmodus. Bei einer nicht dargestellten Ausführungsform ist das im Schlafmodus erfasste Messsignal ebenfalls ein Maß für die zu messende Messgröße und kann an die Austese-/ Auswerteinheit 16 weitergegeben werden.

Das Umschalten zwischen dem Wachmodus WM und dem Schlafmodus SM erfolgt mittels der Steuereinheit 18.

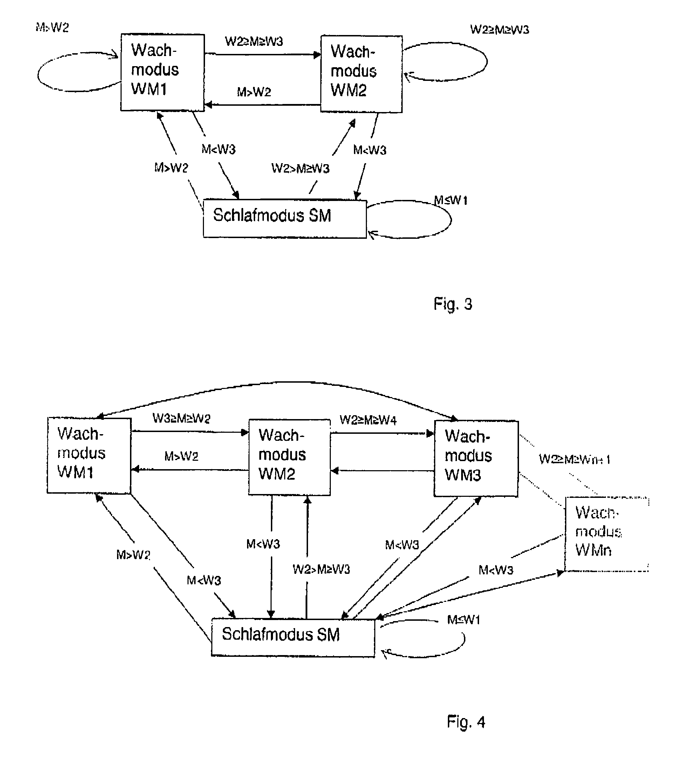

Figur 3 ist eine schematische Darstellung einer weiteren Ausführungsform des erfindungsgemäßen Verfahrens. Neben dem einen Wachmodus WM1 ist bei dem in Figur 3 dargestellten Verfahren ein weiterer Wachmodus WM2 vorgesehen. Analog wie bei dem in Figur 2 dargestellten Verfahren erfolgt die Umschaltung vom Schlafmodus WM in die Wachmodi WM1, WM2, ein Verbleiben in den Wachmodi WM1 und WM2 bzw. Umschalten in den jeweils anderen Modus bzw. Schlafmodus in Abhängigkeit von den erfassten Messwerten mittels der Steuereinheit 18.

Im Grundzustand befindet sich die Messvorrichtung 10 im Schlafmodus SM. Im Schlafmodus SM werden die Messsignale mit einer Taktrate T1 erfasst. Solange die Messvorrichtung 10 einen Messwert M erfasst, der gleich oder kleiner als ein erster vorgegebener Wert W1 ist, bleibt die Vorrichtung im Schlafmodus SM. Wird ein Messwert M erfasst, der größer als ein zweiter vorgegebener Messwert W2 ist, wobei W2>W1 ist, schaltet die Steuereinheit 18 die Messvorrichtung 10 in den ersten Wachmodus WM1. Die Messsignale werden mit einer Taktrate T2 erfasst. Wird im ersten Wachmodus WM1 ein Messwert M ermittelt, der kleiner als ein dritter vorgegebener Wert W3 ist, schaltet die Steuereinheit 18 die Messvorrichtung 10 vom ersten Wachmodus WM1 in den Schlafmodus SM, wobei W3<W2 ist. Solange der erfasste Messwert M größer als der zweite vorgegebene Wert W2 ist, bleibt die Messvorrichtung 10 im ersten Wachmodus WM1. Wird im ersten Wachmodus WM1 jedoch ein Messwert M ermittelt, der gleich oder kleiner als der zweite vorgegebener Wert W2, jedoch gleich oder größer als der dritte vorgegebene Wert W3 ist, schaltet die Steuereinheit 18 die Messvorrichtung 10 von dem ersten Wachmodus WM1 in den zweiten Wachmodus WM2, in dem die Messsignale mit einer Taktrate T3 erfasst werden. Solange die Messvorrichtung 10 einen Wert ermittelt, der zwischen dem dritten vorgegebenen Wert W3 und dem zweiten vorgegebenen Wert W2 liegt, bleibt die Messvorrichtung 10 in dem zweiten Wachmodus WM2. Wird im zweiten Wachmodus WM2 ein Wert ermittelt, der größer als der zweite vorgegebene Wert ist, schaltet die Steuereinheit 18 vom zweiten Wachmodus WM2 in den ersten Wachmodus WM1. Liegt der erfasste Wert jedoch unterhalb des dritten Werts W3, wird die Messvorrichtung 10 direkt in den Schlafmodus SM zurückgeführt. Wenn ausgehend vom Schlafmodus SM ein Wert ermittelt wird, der größer als der erste vorgegebene Wert W1 und gleich oder kleiner als der zweite vorgegebenen Wert W2 ist, wird die Messvorrichtung direkt in den zweiten Wachmodus WM2 geschalten.

Im ersten Wachmodus WM1 wird die Messvorrichtung mit einer höheren Leistung als im zweiten Wachmodus WM2 betrieben.

Wenn es im Rahmen der Erfindung auch möglich ist, dass die Messwerte in den einzelnen Wachmodi bzw. Schlafmodus mit unterschiedlichen Taktfrequenzen T1, T2, T3 erfasst werden können, ist es bei dieser Ausführungsform bevorzugt, dass die Taktfrequenzen T1 bis T3 gleich sind.

Wie Figur 4 zeigt, ist das in Zusammenhang mit Figur 3 beschriebene Verfahren auf eine beliebige Anzahl von Wachmodi erweiterbar.

Wird ein thermisches Anemometer als thermischer Messsensor 12 verwendet, ist im Schlafmodus die Heizleistung des Heizdrahtes im Vergleich zu den einzelnen Wachmodi reduziert. Die Heizleistung in den einzelnen Wachmodi unterscheidet sich ebenfalls. Hierbei ist die Heizleistung bei Messbereichen mit einem hohen Durchfluss höher als bei Meßbereichen mit einem geringen Durchfluss.

Bei Ultraschallströmungssensoren bzw. magnetisch induktiven Messsensoren wird im Schlafmodus die Energiezufuhr zu den Ultraschallsensoren bzw. zu der das Magnetfeld erzeugenden Einrichtung im Vergleich zum Wachmodus reduziert.

## Patentansprüche

1. Verfahren zum Betreiben einer batteriebetriebenen Messvorrichtung (10) eines Fluidzählers, wobei die Messvorrichtung einen Messsensor (12) zum Erfassen eines Messsignals, eine Auslese/ Auswerteeinheit (16) zur Ausgabe eines erfassten Messwerts und eine Steuereinheit (18), die mit dem Messsensor (12) verbunden ist, umfasst und in einem Schlafmodus und in wenigstens einem Wachmodus betreibbar ist, umfassend die Schritte:
- Setzen der Messvorrichtung (10) in den Schlafmodus;
- Periodisches Erfassen eines Messsignals im Schlafmodus mit einer ersten Taktrate;
- Umschalten in einen Wachmodus, wenn im Schlafmodus ein Messsignal mit einem Messwert erfasst wird, der einen ersten vorgegebenen Wert überschreitet;
- Periodisches Erfassen des Messsignals in dem Wachmodus mit einer zweiten Taktrate und Weiterleiten des Messwerts des Messsignals an eine Auslese/Auswerteeinheit (16), wobei der Messwert ein Maß zur Bestimmung des Durchflusses eines Fluidstroms durch den Fluidzähler ist;
- Umschalten in den Schlafmodus, wenn der erfasste Messwert in dem Wachmodus einen zweiten vorgegebenen Wert unterschreitet;
wobei die Messvorrichtung (10) im Schlafmodus mit einem geringeren Energieverbrauch betrieben wird als in dem wenigstens einen Wachmodus, indem der Messsensor im Schlafmodus mit einer geringeren Leistung betrieben wird als im Wachmodus.

2. Verfahren nach Anspruch 1, **dadurch gekennzeichnet, dass** die Messvorrichtung in einem ersten und einem zweiten Wachmodus betreibbar ist, umfassend die Schritte:
- Umschalten in den ersten Wachmodus, wenn im Schlafmodus ein Messsignal mit einem Messwert erfasst wird, der einen ersten vorgegebenen Wert überschreiteit
- Periodisches Erfassen des Messsignals mit einer zweiten Taktrate und Weiterleiten des Messwerts an eine Auslese/Auswerteeinheit (16), wobei der Messwert ein Maß zur Bestimmung des Durchflusses eines Fluidstroms durch den Fluidzähler ist;
- Umschalten von dem ersten Wachmodus in den zweiten Wachmodus, wenn ein Messsignal mit einem Wert erfasst wird, der oberhalb des zweiten und unterhalb eines dritten vorgegebenen Werts liegt, wobei der Messwert ein Maß zur Bestimmung des Durchflusses eines Fluidstroms durch den Fluidzähler ist;
- Periodisches Erfassen des Messsignals mit einer dritten Taktrate und Weiterleiten des Messwerts an eine Auslese/Auswerteeinheit (16);
- Umschalten in den ersten Wachmodus oder in den Schlafmodus in Abhängigkeit von dem Wert des erfassten Messsignals im zweiten Wachmodus.

3. Verfahren nach Anspruch 1, **dadurch gekennzeichnet, dass** die Messvorrichtung in einem ersten und einem zweiten Wachmodus betreibbar ist, umfassend die Schritte:
Umschalten von dem Schlafmodus in einen ersten oder zweiten Wachmodus in Abhängigkeit von dem erfassten Messwert;
- Periodisches Erfassen des Messsignals mit einer vorgegebenen Taktrate und Weiterleiten des Messwerts an eine Auslese/Auswerteeinheit (16), wobei der Messwert ein Maß zur Bestimmung des Durchflusses eines Fluidstroms durch den Fluidzähler ist;
- Umschalten von dem ersten Wachmodus in den zweiten Wachmodus oder Schlafmodus bzw. vom dem zweiten Wachmodus in den ersten Wachmodus oder Schlafmodus in Abhängigkeit von dem Wert des erfassten Messsignals.

4. Verfahren nach einem der vorhergehenden Ansprüche, **dadurch gekennzeichnet, dass** eine Vielzahl von Wachmodi vorgesehen ist und das Umschalten zwischen der Vielzahl von Wachmodi und dem Schlafmodus und zwischen den Wachmodi in Abhängigkeit vorgegebener Messwerte erfolgt.

5. Verfahren nach einem der vorhergehenden Ansprüche, **dadurch gekennzeichnet, dass** die Messvorrichtung in den einzelnen Wachmodi mit unterschiedlicher Leistung betrieben wird.

6. Verfahren nach einem der vorhergehenden Ansprüche, **dadurch gekennzeichnet, dass** das Umschatten zwischen dem wenigstens einen Wachmodus und dem Schlafmodus und/oder zwischen den Wachmodi mittels der Steuereinheit (18) erfolgt.

7. Verfahren nach einem der vorhergehenden Ansprüche, **dadurch gekennzeichnet, dass** der Messsensor in einem Wachmodus ein Messsignal liefert, dessen Messwert ein Maß zur Bestimmung des Durchflusses eines Fluidstroms durch den Fluidzähler ist, und dass im Schlafmodus der Messsensor ein Wächter ist.

8. Verfahren nach einem der Ansprüche 1 bis 6, **dadurch gekennzeichnet, dass** der in einem Wachmodus erfasste Messwert sowie der im Schlafmodus erfasste Messwert ein Maß zur Bestimmung des Durchflusses eines Fluidstroms durch den Fluidzähler sind.

9. Verfahren nach einem der vorhergehenden Ansprüche, **dadurch gekennzeichnet, dass** die Taktraten im Schlafmodus und im Wachmodus gleich sind.

10. Verfahren nach einem der vorhergehenden Ansprüche, **dadurch gekennzeichnet, dass** der Messsensor (12) ein thermisches Anemometer mit einem Heizdraht isi, wobei der Heizdraht in dem wenigstens einen Wachmodus auf eine höhere Temperatur aufgeheizt wird als im Schlafmodus.

11. Verfahren nach einem der Ansprüche 2 bis 10, **dadurch gekennzeichnet, dass** der Messsensor (12) ein thermisches Anemometer mit einem Heizdraht ist, wobei der Heizdraht in den einzelnen Wachmodi unterschiedlich aufgeheizt wird.

12. Messvorrichtung eines Fluidzählers, wobei die Messvorrichtung einen Messsensor (12) zum Erfassen eines Messsignals, eine Auslese-/Auswerteeinheit (16) zur Ausgabe eines erfassten Messwerts, eine Steuereinheit (18), die mit dem Messsensor (12) verbunden ist, und eine Batterie (14) umfasst, **dadurch gekennzeichnet dass** in Abhängigkeit von den erfassten Messwerten die Messvorrichtung (10) mittels der Steuereinheit (18) in einem Schlafmodus und in wenigstens einem Wachmodus betreibbar ist, dass der im Wachmodus erfasste Messwert ein Maß zur Bestimmung des Durchflusses eines Fluidstroms durch den Fluidzähler ist, und dass die Messvorrichtung (10) im Schlafmodus mit einem geringeren Energieverbrauch betreibbar ist als in dem wenigstens einen Wachmodus, indem der Messsensor im Schlafmodus mit einer geringeren Leistung betreibbar ist als im Wachmodus.

13. Messvorrichtung nach Anspruch 12 geeignet zur Durchführung eines Verfahrens nach einem der Ansprüche 1 bis 9.

14. Messvorrichtung nach Anspruch 12 oder 13, **dadurch gekennzeichnet, dass** der Messsensor (12) ein magnetisch induktiver Messsensor oder ein Ultraschallströmungssensor ist.

15. Messvorrichtung nach einem der Ansprüche 12 bis 14 geeignet zur Durchführung eines Verfahrens nach einem der Ansprüche 1 bis 11, **dadurch gekennzeichnet, dass** der Messsensor (12) ein thermisches Anemometer ist.
